# EUROPEAN PATENT SPECIFICATION

(11) **EP 0 734 540 B1**
(45) Date of publication and mention of the grant of the patent: **18.07.2001**
(21) Application number: 95904506.3
(22) Date of filing: 15.12.1994
(51) Int. Cl.: G02B 27/02

(54) **A SELF MASKING DISPLAY DEVICE**
SELBSTTÄTIG ABDUNKLENDE ANZEIGE-VORRICHTUNG
DISPOSITIF DE VISUALISATION A MASQUAGE AUTOMATIQUE

(30) Priority: 15.12.1993 IL 10803793; 15.12.1993 IL 10803893
(43) Date of publication of application: 02.10.1996
(73) Proprietor: Smartlight Limited, Yokneam Elite 20692 (IL)
(72) Inventor: INBAR, Dan, 34334 Haifa (IL); WOLF, Hanan, 34746 Haifa (IL); NETTER, Zvi, 34467 Haifa (IL)
(74) Representative: de Bruijn, Leendert C.
(86) International application number: EP9404228
(87) International publication number: WO9516934

(56) References cited:
- WO-A-89/03064
- WO-A-91/10152
- WO-A-93/01564
- DE-A- 3 933 988
- US-A- 4 510 708

## Description

### FIELD OF THE INVENTION

The present invention relates generally to a transparencies viewing device and, more particularly , to apparatus for holding and illuminating X-ray and like transparencies.

### BACKGROUND OF THE INVENTION

Medical X-ray transparencies are usually examined by placing them over the viewing surface of a device commonly referred to as an illuminator. Conventional illuminators normally comprise a box-like structure enclosing fluorescent lighting tubes behind a light diffusing plate defining the display area. Commonly, transparencies are retained on the surface of the viewing surface by pushing the upper edge of the transparencies under spring-loaded film-holder clips located along the top edge of the viewing surface.

Standard size illuminators have a viewing surface 43.18 cm (17 inches) high and 35.56 cm (14 inches) or multiples of 35.56 cm (14 inches) (i.e. 71.1 cm (28 inches) or 142.2 cm (56 inches)) wide. Usually, each 35.56 cm (14 inch) width of viewing surface has its own fluorescent tubes and control switch. Such viewing surface enables the viewing of standard size X-ray films which measure up to 43.18 cm (17 inches) by 35.56 cm (14 inches).

The sections of the viewing surface not covered by transparencies need not be illuminated. This eliminates unnecessary glare from areas outside the transparency. When transparencies smaller than 35.56 cm (14 inches) by 43.18 cm (17 inches) are to be examined, they are typically retained on the display area in the same manner as full size transparencies, i.e., suspending them by means of the film-holders along the top of the viewer. This leaves a portion of the display area surrounding the transparencies fully illuminated, with the resulting glare detracting from the visual perception of the person trying to study the transparency and assess the information it contains.

Often, transparencies contain several very transparent areas, and, frequently, radiologists have to examine over-exposed transparencies. In these cases, considerable glare emanates through areas of the transparencies themselves.

Attempts have been made in the past to provide viewing devices for X-ray transparencies which shield the eyes of the observer from light other than that passing through the transparencies; to obscure light in parts of the transparencies, and to reduce the contrast in transparencies when so required.

In US Patent 1,988,654 to Haag, there is disclosed a light box which incorporates two manually movable curtains for masking all of the light-transmitting surfaces of a diffuser up to the edges of a transparency.

US Patent 2,436,162 to Cadenas discloses an X-ray viewer having a masking arrangement incorporating a plurality of hinge - connected opaque masks which may be manually pivoted relative to each other to expose all or only selected parts of an X-ray transparency.

US Patent 4,004,360 to Hammond is directed to a self-masking viewing device which purports to automatically obscure areas of the viewing screen not occupied by the X-ray transparency. In accordance with such a device, the screen is provided with a multiplicity of holes which may be selectively blocked by shutters or opened for the passage of light. The interior of the device is connected to a vacuum source which functions to hold the film against the front surface of the device.

The vacuum functions, in addition, to close the shutters connected with those holes not covered by the transparencies, so that passage of light through such holes is prevented. Air cannot pass through those holes in registry with the transparencies and, thus, the shutters associated with the covered holes remain open for the passage of light. The device described is unsuitable for critical inspection of X-ray transparencies since the presence of holes and shutters in the areas in registry with the transparencies creates a pattern behind the transparencies which interferes with the ability to accurately read them.

US Patent 4,373,280 to Armfield discloses an X-ray viewing plate having a cross bar for supporting transparencies at a central portion of the screen. A series of shades is provided which may be manually activated to obscure selected parts of the illuminated surface.

US Patent 4,510,708 to Porkinchak discloses an X-ray viewing device which includes a series of masks on an elongated scroll. In a specific embodiment of the invention, the scroll is moved by a motor on a pair of feed rolls. The masks are sized to correspond with stock sizes of X-ray transparencies. The apparatus has a dimensional sensing mechanism which aligns a selected mask with a positioned transparency automatically in accordance with the sensed dimension. The transparencies are inserted into a film-holder. The widthwise sensing function is performed by a series of levers or fingers positioned to engage an edge of the film.

US Patent 4,637,150 to Geluk describes a system in which a cathode ray tube is used as a light source and the light emitted by this source is modulated in accordance with the stored density of a transparency. This system is impractical due to the limited sizes and associated light intensity outputs of CRTs for this type of illuminator.

German Patent Application DE 33 31 762 A1 describes an array type electrochromatic illuminator in which back-lighting selectively illuminates portions of a viewing surface in response to the application of voltage to horizontal and vertical strip conductors on opposite faces of an electrochromatic material placed between the source of illumination and the viewing surface.

US Patent Application S.N. 07/861,982 to Inbar et. al. discloses a self-masking transparency viewing apparatus having a mask- pattern generating device which may be an electrically-controlled Liquid Crystal Array (LCA). In addition, there is provided a transparency detection means, such as optical sensors which recognize optical properties, for example, attenuation, on the display area including images within the transparencies and the face of the transparencies themselves. The detection data is transferred to a system control unit which drives the LCA to produce a complementary masking pattern in conformity with the displayed transparencies, masking all other portions of the display area.

From the above-referenced prior art, it will be understood that there has not heretofore been available a device capable of producing an illumination field in conformity with the displayed image-carrying transparencies, with no interposing masking means or apparatus between the light source and the illuminated portions of the transparencies, and which does not require operator assistance to recognize and set the transparency field, or parts thereof, to be illuminated.

### SUMMARY OF THE INVENTION

It is, therefore, an object of the present invention to improve prior art transparency viewing devices with illumination masking mechanical means or apparatus, by automating the recognition and setting of the transparency field, or parts thereof, to be illuminated. The automation comprises detection of the insertion of a transparency, or delineation of the area occupied by the transparency, or recognition of boundaries of the transparency, or recognition of boundaries of the image-carrying portion of the transparency, or any combination of the above.

The automation also comprises a movement of masking means, in accordance with the information obtained by the above-mentioned detection which may also be determined in accordance with a predefined decision procedure. The resulting device comprises a mechanical illumination masking means and detection means, automatically producing an illumination field in conformity with the displayed image-carrying transparencies.

It is another object of the present invention to provide enhancement of visual perception of an image-carrying transparency by automatic masking of the display area in conformity with the displayed transparencies, including a mask pattern generating device which is not interposed between the illumination source and the illuminated portion of the displayed transparencies.

It is yet another object of the present invention to provide a transparency detection means, capable of recognizing and of mapping the optical image contained in the transparencies, which is not interposed between the light source and the illuminated portion of the displayed transparencies, but which is contained between the transparency plane and the illumination source.

The present invention comprises, according to one aspect thereof, an improved transparency viewing apparatus, more particularly, a viewing device for X-ray films or the like, in that an appropriate field of the viewing area is illuminated automatically, in response to the placement of a transparency on the viewing apparatus.

There is thus provided, in accordance with the invention, a self-masking transparency viewing device including:
a light transmitting viewing surface for accommodating a transparency to be viewed;
a light source which provides backlight illumination to the viewing surface, thereby creating a viewing field having a transparency-bearing region; and
an automatic masking system comprising:
   at least one sensor which senses the boundaries of at least an image-carrying portion of the transparency-bearing region of the viewing field and provides an output corresponding to the location of said boundaries;
   at least one movable masking element for masking an area of said viewing field outside the image carrying portion of the transparency-bearing region; and
   a controller which controls the position of the at least one masking element, based on the output of the at least one sensor, so as to mask at least a portion of the area of the viewing field outside the image-carrying portion of the transparency-bearing region.

More particularly, the present invention is a transparency viewing device including an essentially conventional housing, a light fixture and a diffuser. The device includes means for detecting the insertion of a transparency, or means for delineating the area occupied by the transparency, or means for recognizing the transparency boundaries or determining boundaries of the image-carrying portion of the transparency, or any combination of the above. The device includes means for moving a masking mechanism into registry with the portions of the illumination area which are not occupied by the transparency and/or image-carrying parts of the transparency. The portions to be covered are determined based on control signals obtained by the detection means.

In accordance with the invention, there is provided a device for enhancing the visual perception of an image-carrying transparency, including a front surface for positioning of an image-carrying transparency. An arrangement is provided containing a movable masking apparatus visually aligned with the front surface. The transparency, or parts thereof, at the front surface, is back illuminated by a light source positioned for directing light through the unmasked portions of the front surface and through the transparency, or parts thereof, towards an observer.

In accordance with the invention, the apparatus includes an arrangement of motorized masking-elements such as movable opaque curtains. The structure of mechanical opaque curtains is well known in the art. For example, the curtain assembly may be in the form of flexible opaque material rolled around a motorized cylinder and including a rigid member attached to its leading edge.

In a preferred embodiment of the invention, the transparencies are retained on the front surface of the device by a method commonly used in X-ray viewing devices e.g., by pushing the upper or lower edge of the transparencies under spring-loaded film-holder clips located along the top or bottom edge of the face plate. The masking arrangement comprises a plurality preferably of three (3), movable opaque curtains, two (2) of which move horizontally and cover vertical portions of the illuminating surface. The third opaque curtain moves vertically to block remaining portions of the illuminating surface from bottom to top, or top to bottom. One or more photosensing devices (e.g. a detector or it's lightguide) are mounted on some or all of the movable opaque curtains.

In an alternative embodiment of the present invention, at least one photosensor is located at the edge of a movable opaque curtain and oriented to receive light (preferably ambient illumination) transmitted through the front surface of the device towards the illuminating surface. The photosensors respond to the light intensity modulation produced by the transparency or by the image within and produce signals T_{X}(Y) or T_{Y}(X) or T(X,Y) corresponding to T, the attenuations of light caused by the transparency, or the image within the transparency, relative to the location (X,Y) of said attenuations. Subsequently, the above signals are used to determine and control the positioning of the masking arrangement.

In an alternative embodiment of the present invention, at least one differential photosensor or at least one photosensor pair is oriented to produce differential or separate signals corresponding to the intensity of light transmitted through the transparency as well as the intensity of light transmitted through a portion of the front surface image plane not occupied by the transparency.

In a further, preferred, embodiment of the present invention, at least one of the masking elements is positioned between the surface containing the transparency and the observer. In such arrangement at least one photosensor is located at the edge of the masking-element and oriented to receive the light projected from the illumination source towards the front surface.

Alternatively, delineation of the area occupied by the transparency and recognition of the image-carrying portion of the transparency are achieved with little or no exposure of the observer to the illumination source other than through the transparency or the image-carrying portion thereof. This attribute can best be described as "normal masking".

In an alternative embodiment of the present invention, at least one photosensor is located at the edge of a movable opaque curtain and oriented to receive light from the illumination source transmitted towards the front surface. The photosensors respond to local light intensity produced by the illumination source and produce signals T_{X}(Y), T_{Y}(X) or L(X,Y), corresponding to the local light intensity variations of the illumination source. Subsequently, the intensity signals may be employed to determine and adjust the intensity and uniformity of the illumination source or to produce a system-failure alarm/indication.

In accordance with the a preferred embodiment of the present invention, the device can be used as a whole or in part in conjunction with a spatial light modulator. In this case, the disclosed movable photosensors facilitate means for mapping the light transmission attenuation of the transparency, or parts thereof. The mapping means are preferably not interposed between the light source and the illuminated portion of the displayed transparencies. Rather, the mapping means may be interposed between the front surface and the illumination source. The signals produced by the photosensors may be used for selective gray level shading such as "unsharp masking".

More particularly, using even a single masking opaque curtain, e.g. "bottom masking", enables the use of LCDs as spatial light modulators, with the currently available size of about 35.56 cm x 35.56 cm (14"x14") in an additional compartment, e.g. "top". Furthermore, such an arrangement enables the use of one dimensional, e.g. longitudinal, strips of the LCD, as opposed to a two dimensional matrix, thus enabling direct-drive methods which, inherently, produce the highest contrast achievable from LCDs.

In an alternative embodiment to the present invention, one dimensional "width masking" is achieved by spatial control of the back-lighting. "Width masking" can be achieved, for example, by selectively energizing an array of longitudinal lamps such as fluorescent bulbs or, more specifically, "aperture lamps" which are available from "LCD Lighting Inc.".

In accordance with the present invention, the apparatus may be used as a stand-alone self-masking device, as an add-on superimposed on a non-masking transparency (e.g. film) viewer, or in combination with patent applications US S.N. 07/861,982, or US S.N. 07/862,982, PCT/EP91/01310, U.S. patent application and PCT patent application to Inbar et al., both of which are titled "Improved Display Device" and both filed on November 28, 1994. For example the apparatus may include an externally mounted imaging camera for image delineation, or may be incorporated into a magazine-fed automatic film viewer, i.e. an "alternator", in which case the available film pick & place mechanism of the alternator may be utilized to perform some of the identification tasks. An additional external source of visible or other radiation may be utilized to enhance the sensitivity of the photosensors to differences in the transmission of the image-carrying transparency.

### BRIEF DESCRIPTION OF THE DRAWINGS

The present invention will be better understood from the following detailed description of preferred embodiments of the invention, taken in conjunction with the following drawings in which:
Fig. 1A is a schematic, partly cut-away, perspective view illustration of a self-masking display device with movable opaque curtains in accordance with a preferred embodiment of the present invention;
Fig. 1B is a schematic front view illustration showing width-detection means and film attenuation mapping used by the self-masking display device according to a preferred embodiment of the present invention;
Fig. 1C is a schematic flow chart showing a preferred mode of operation of the device of Fig. 1A in accordance with a "normally masked" sequence;
Fig. 1D is a schematic, cross-sectional, illustration of a self-masking display device using curtain mounted photosensors in accordance with a preferred embodiment of the present invention;
Fig. 1E is a partial, schematic, partly cut-away, perspective, illustration of a preferred embodiment of the invention in which the illumination field is in conformity with an image-carrying portion of a transparency;
Fig. 1F is a schematic, cross-sectional, illustration showing the location of a moving opaque curtain between a faceplate and a faceplate diffuser of a display device similar to that of Fig. 1A;
Fig. 1G is a schematic, cross-sectional, illustration of a finger pointing method for manual intervention in the operation of a self-masking display device as in Fig. 1A;
Fig. 2 is a schematic, perspective, illustration of a movable opaque curtain in combination with an LCD spatial modulator used in some alternative embodiments to the display device of the present invention;
Fig. 3 is a schematic, cross-sectional, illustration showing a movable opaque curtain in combination with selectively energized lamps used in further alternative embodiments to the display device of the present invention;
Fig. 4 is a schematic, cross-sectional, illustration showing a further preferred embodiment of the present invention in which masking elements are located between a light fixture and a front panel of the display device;
Fig. 5 is a schematic, cross-sectional, illustration showing an alternative preferred embodiment of the present invention in which masking elements and sensors are located between the transparency plane and the observer;
Fig. 6 is a schematic, perspective, illustration of another preferred embodiment of the present invention in which multiple maskable portions are located under an uninterrupted faceplate of the display device;
Fig. 7 is a schematic, perspective, illustration of a further preferred embodiment of the present invention in which the self-masking display device is incorporated into an alternator;
Figs. 8A, 8B and 8C are schematic illustrations of various masking elements optionally used by the self-masking display device according to preferred embodiments of the present invention;
Figs. 9A is a front view, schematic, illustration of a display device using an ambient reference, in accordance with another preferred embodiment of the present invention; and
Fig. 9B is a top view, schematic, illustration of the display device of Fig. 9A and the circuitry used thereby.

### DETAILED DESCRIPTION OF THE PREFERRED EMBODIMENTS

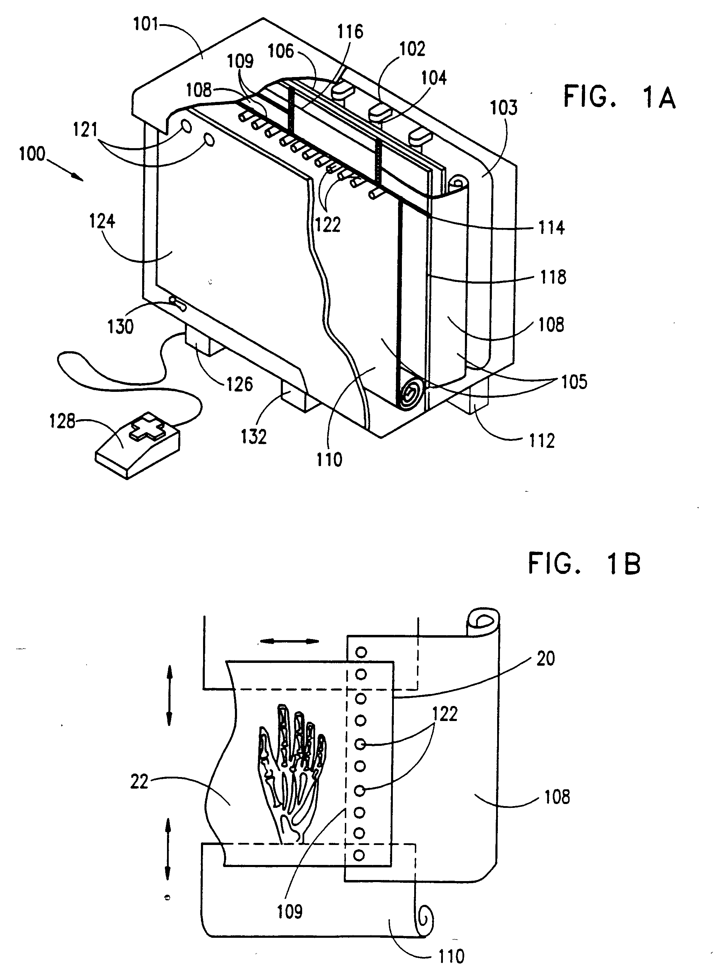

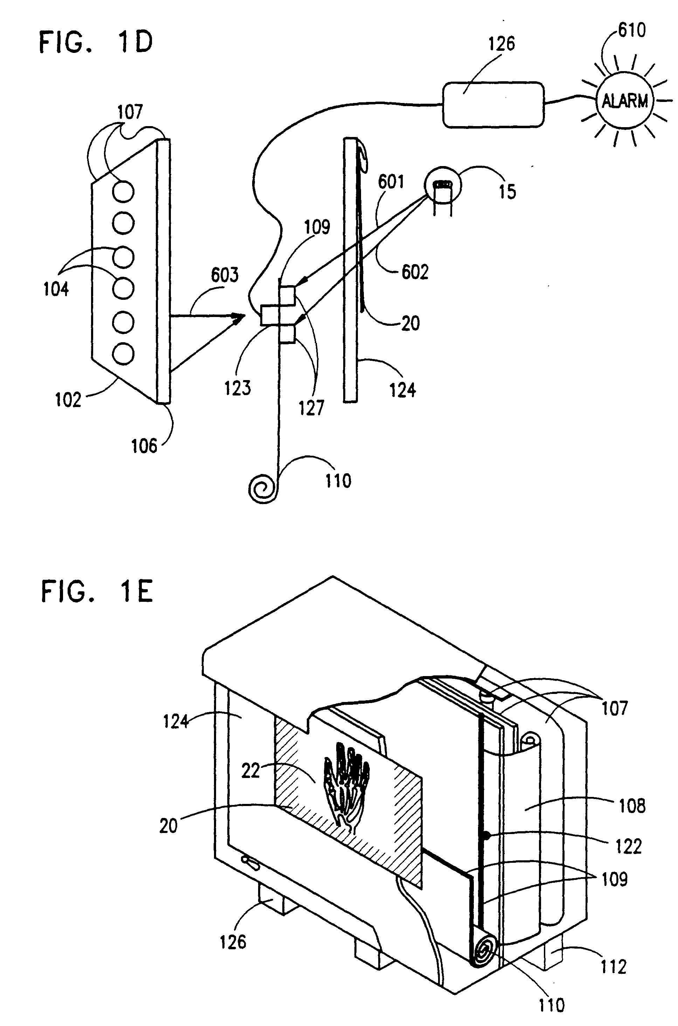

Fig. 1A schematically illustrates the basic functional arrangement of a self-masking display device 100 including movable opaque curtains 108 and/or 110 in accordance with a preferred embodiment of the invention. Self-masking display device 100 comprises an opaque housing 101 which covers five sides of the display device and a light transmitting face plate 124 covering the sixth side. Transparencies, e.g. films, 20, as illustrated in Fig. 1E, are held on faceplate 124, for example, by slipping the transparencies under an edge 120 of housing 101. Alternatively, clips or other film holders may be provided to hold the film on the face plate as is well known in the art.

A bank of illuminators 104 is located behind face plate 124. An optional diffuser 106 is located between the illuminators 104 and the face plate 124 such that light reaching transparencies 20 is substantially uniform. The interior of housing 101 or at least the back interior surface 102 of housing 101 is preferably painted so as to diffuse and reflect rear and side illumination from illuminators 104. Optionally, an optical reflector 103, known in the art as a luminaire, is placed behind and partially around illuminators 104.

A masking arrangement 105, comprising two horizontal moving opaque curtains 108 and a vertical moving opaque curtain 110, is located interior to face plate 124. The moving opaque curtains 108 advance or retrack along linear tracks 118 by means of pulling wires 116, pulleys 114 and motors 112 as known in the art.

In some preferred embodiments of the present invention, other mechanisms known in the art may be used for guiding the motion of curtains 108 behind face plate 124, for example mechanisms including elements such as gears, bearings, springs or a movable endless belt curtain having alternating transparent and opaque portions.

In some preferred embodiments of the invention, electrical, pneumatic or hydraulic motors or other motorized mechanisms known in the art may be used for moving curtains 108, as well as any combinations of such mechanisms.

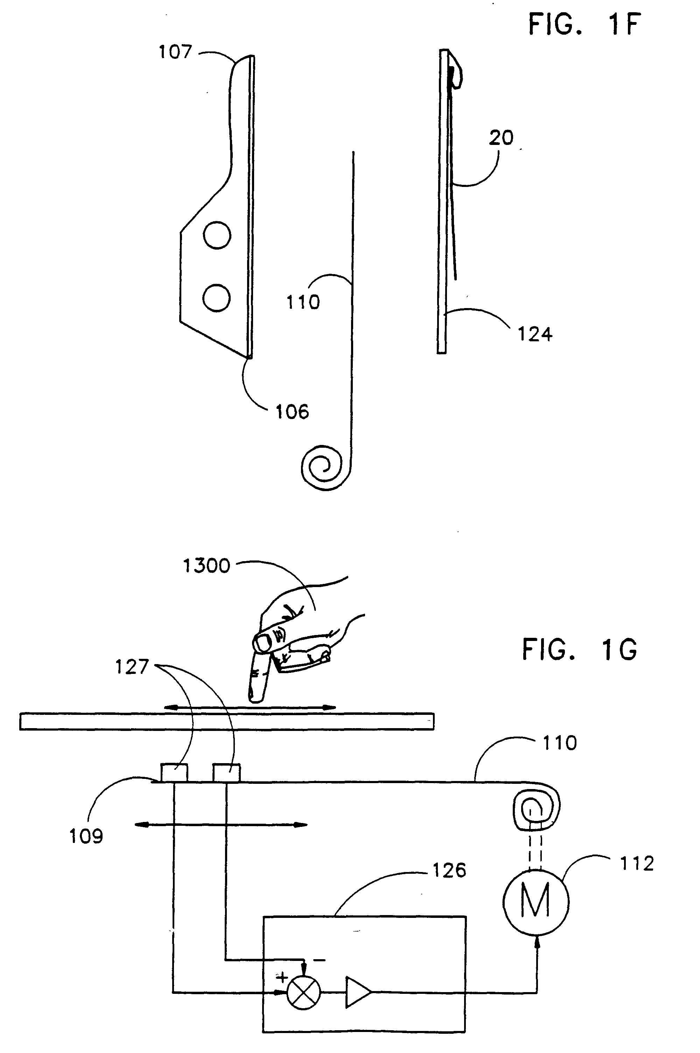

At least one photosensor 122 is located on at least one of the edges 109 of moving opaque curtains 108 or 110. Photosensor 122 is positioned so as to receive light passing through the faceplate 124 and/or transparency 20. A photosensor signal generated by photosensor 122 is transmitted to a control system 126 (Figs. 1D and 1G) which, in response thereto, produces a control signal which controls the position of the movable opaque curtains 108 or 110.

In some embodiments of the invention, optional stationary sensors 121 are located under edge 120 of housing 101. Stationary sensors 121 detect the insertion of a transparency 20 into self-masking display device 100. The stationary sensors 121 may be used for measuring one linear dimension of transparency 20, such as width, and may generate a corresponding signal to the control system 126. As known in the art, sensors 121 may include mechanical levers, electrical switches, photosensors or proximity sensors responsive to physical changes such as changes in capacitance, inductance or pressure.

In some embodiments of the invention, additional manual override means 128 is optionally provided for controlling the position of curtains 108 and/or 110 and, preferably, to control the illumination intensity. Any manual control means known in the art may be used, for example a Joystick, a mouse, electrical switches, a toggle switch, photosensors, an electronic touch screen, a voice recognition system, a head mounted control transmitter, a light pen or a computer keyboard or any combination of the above.

An on/off switch 130 for initiating and terminating the operation of self-masking display device 100 is preferably located on the front side of housing 101. A power supply unit (not shown) for powering self-masking display device 100 is preferably mounted inside housing 101 of the display device.

Fig. 1B shows schematically the use of width detection means according to another preferred embodiment of the present invention. Fig. 1B also illustrates a preferred technique of transparency attenuation mapping. A linear array of photosensors 122 is mounted on the edge 109 of movable curtain 108 with photosensors 122 directed to receive light, preferably ambient illumination, which is transmitted through transparency 20 or faceplate 124. The photosensors 122 respond to changes in light intensity, particularly changes caused when curtain 108 reaches an edge of transparency 20 or an edge of an image-carrying portion 22 within the boundaries of transparency 20. In response to such intensity changes, sensors 122 produce signals T_{X}(Y), T_{Y}(X) or T(X,Y) which correspond to the attenuation of light intensity, T, at different locations, (X,Y), on faceplate 124. The "attenuation map" defined by the signals of sensors 122 can be used to identify regions covered by transparency 20 or image portion 22 thereof.

In a preferred embodiment of the invention, the signals from sensors 122 are used by control system 126 to determine and control the positioning of the masking arrangement, e.g. to control the positioning of moving opaque curtains 108 and/or 110. Fig. 1B illustrates one preferred embodiment of the invention in which masking by curtains 108 and 110 reaches the boundaries of image-carrying portion 22 such that non image-carrying portions of transparency 20 are masked.

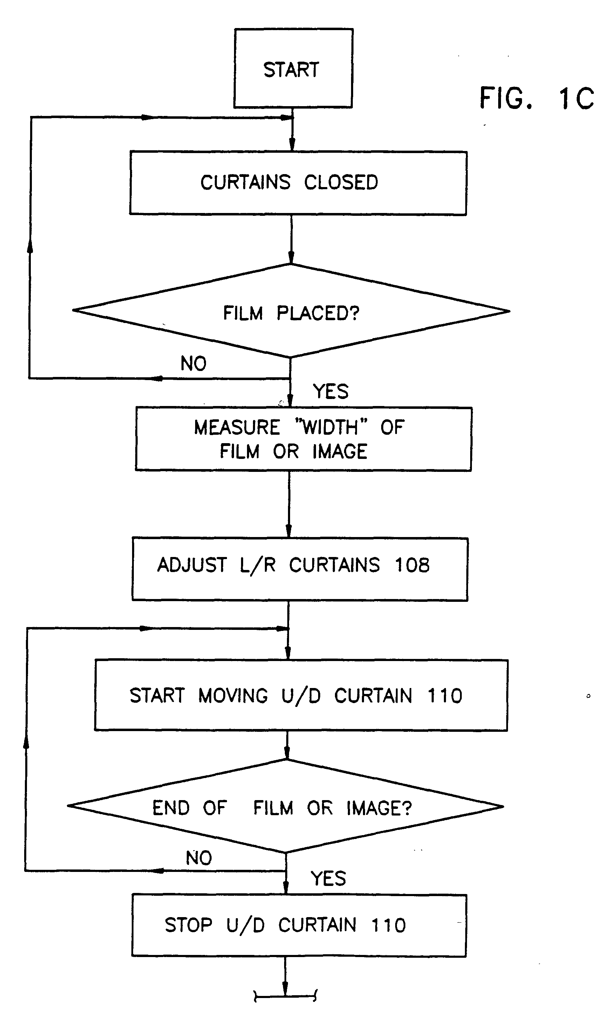

Fig. 1C is a flow chart illustrating a preferred mode of operation of the self-masking display device of the present invention in accordance with a "Normally Masked" sequence in which, initially, before curtain 108 or 110 moves to the correct masking position, faceplate 124 is completely masked. The methodology of Fig. 1C can be implemented using appropriate hardware or software in control system 126, which controls the positioning of opaque curtains 108 and/or 110 according to the flow chart. It will be appreciated that the method of Fig. 1C enables efficient masking of the illuminated area outside transparency 20 or the illuminated area outside image-carrying portion 22, depending on the specific embodiment, whereby the observer is not blinded by direct illumination from the radiation source prior to or during the determination of the correct masking position.

Preferably, the process starts when a transparency is sensed as being placed on the faceplate and the curtains close automatically when its removal is sensed.

Fig. 1D shows schematically an alternative, preferred, arrangement in which at least one differential photosensor or photosensor pair 127 is located on edge 109 of moving curtain 110 or 108 and is oriented to receive and respond to light from an external source 15, such as light rays 601 and 602, transmitted through faceplate 124. As shown in Fig. 1D, edge 109 of curtain 110 can be detected by detecting a difference between the light intensity of ray 601, which is attenuated by the bottom of portion of transparency 20. and ray 602 which is received through an unoccupied portion of faceplate 124.

In a preferred embodiment of the invention, external light source 15 may have a coded intensity modulation to match a decoder circuit in photosensor pair 127. Alternatively, external source 115 may emit radiation at a spectral wavelength, preferably different from the room lighting, to which photosensor pair 127 is sensitive.

In some embodiments of the present invention, at least one additional photosensor 123 is located at the back side of edge 109 of curtain 110 or 108 and is oriented to receive and respond to radiation 603 from a backlight arrangement 107. Backlight arrangement 107 includes illumination sources 104, which may be fluorescent light strips, and an optional diffuser plate 106 which diffuses the light to produce substantially homogeneous illumination on faceplate 124. Photosensors 123 produce signals L_{X}(Y), L_{Y}(X) or L(X,Y), corresponding to the intensity of backlighting, L, at locations (X,Y). This enables mapping of spatial variations in the intensity of illumination from backlight arrangement 107. Signals L(X,Y) may be subsequently used by system controller 126 to determine and adjust the intensity and uniformity of the backlighting from backlight arrangement 107 and/or to activate a system-failure alarm/indicator 610.

Fig. 1E schematically illustrates the self-masking display device of the present invention operating in a preferred mode of operation in which the illuminated field, i.e. the unmasked area, includes only image-carrying portion 22 of transparency 20. The positions of opaque curtains 110 and 108 are controlled by control system 126, preferably using motors 112 which move the curtains to a position which yields desired masking, for example masking of portions of faceplate 124 not occupied by transparency 20. In a preferred embodiment, as shown in Fig. 1E, only image-carrying portions, such as portion 22 of transparency 20 remain unmasked. Whether the edge of transparency 20 or the edge of image-carrying portion 22 is detected as the boundary of the masking area depends on the sensitivity of sensor 122 and/or of control system 126 to changes in light intensity.

In a further preferred embodiment of the invention, as shown in Fig. 1E, mapping of the viewing area is performed using a CCD camera 80 instead of sensors 122 as shown in Fig. 1B. CCD 80 generates an electronic image corresponding to the optical image of the viewing area and the position of the masking elements is controlled by controller 126 based on the electronic image, for example by detecting the locations of abrupt changes in the "density" of the electronic image as known in the art.

Fig. 1F is a simplified, cross-sectional, schematic, side view, illustration of an opaque curtain, such as curtains 108 and 110, located between faceplate 124 and diffuser 106 of backlighting arrangement 107 as in Fig. 1D. Fig. 1G is a schematic, cross-sectional, illustration of a variation of the preferred embodiments described above, incorporating a finger-pointing method of manual intervention. At least one differential photosensor or photosensor pair 127, preferably located on the front surface of edge 109 of curtain 110 or 108, is adapted to detect illumination changes caused by external intervention, such as by the hand 1300 of a user, and to transmit appropriate control signals to system controller 126 when such intervention is detected.

As known in the art, the above described mechanism can be utilized to provide tracking motion whereby the edge 109 of movable curtain 108 or 110 follows the motion of hand 1300 over faceplate 124. Such tracking can be achieved, for example, through closed loop control by system controller 126 and motor 112, as long as there is a substantial difference between the two signals produced by the differential photosensor or photosensor pair 127. When hand 1300 is removed from faceplate 124, the two signals of sensor 127 are substantially the same and, thus, motion of opaque curtains 108 or 110 is halted. Alternatively, hand 1300 can be replaced by other pointing means, as known in the art, such as a light-pen, a laser-pointer or the like. Additionally, other detection methods can be used, for example the photosensors can be replaced by detectors of ultrasound, RF or other waves generated by appropriate sources, or by proximity pick-up devices which detect changes in capacitance, inductance, pressure or the like, as known in the art.

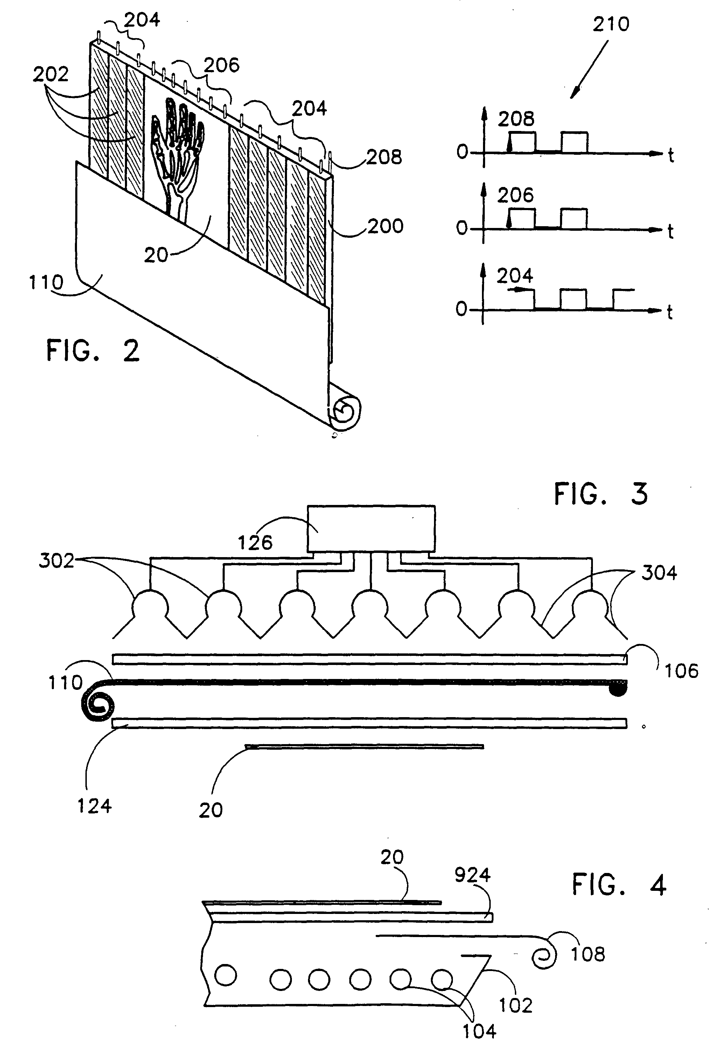

Fig. 2 is a schematic perspective view of part of a selfmasking display device according to an alternative embodiment to the present invention in which masking means are located between illumination sources 104 and faceplate 124. The masking means preferably include movable masking curtain 110 as described above and a liquid crystal array (LCA) spatial light modulator 200.

The LCA preferably includes a viewing device such as is known in the art and, particularly, as disclosed in U.S. patent applications S.N. 07/861,982, S.N. 07/862,982, in PCT patent application PCT/EP91/01310 and in new U.S. patent application and new PCT patent application to Inbar et al., both of which are titled "Improved Display Device" and both filed on November 28, 1994. In an alternative embodiment to the invention the LCA is addressed with a direct addressing scheme to drive vertical LC strips 202 using electrodes 204 and 206 and backplane electrode 208. For a "Normally Clear" mode LCA, the electrode designated 206 receive an "off" signal, and the electrodes designated 204 receive an "On" signal. An exemplary signal scheme 210 is shown on the right side of Fig. 2.

Transparency 20, or a predetermined portion thereof, preferably an image-carrying portion thereof, is illuminated by backlighting as in the previous embodiments. However, in contrast to the previous embodiments, the illumination intensity on the remaining display area is substantially reduced by "On" elements 204 of LCA 200 and/or by curtain 110. Fig. 2 shows LCA 200 with vertical LC elements and curtain 110 which moves vertically. It should be appreciated, however, that a similar effect is achieved when LCA 200 is replaced with an LCA having horizontal LC elements and curtain 110 is replaced with curtains which move horizontally.

Fig. 3 schematically illustrates another alternative embodiment to the present invention in which movable masking curtain 110 is placed between an array of selectively energizable illumination sources 302 and faceplate 124. According to this embodiment, masking is achieved by the combined effect of masking curtain 110 and the selective energizing of elements of the array of light sources 302. Sources 302 are preferably fluorescent aperture lamps, as available from "LCD Lighting, Inc.", which are mounted vertically. A lightguide 304 is optionally placed between each of sources 302 and diffuser 106, which is also optional.

Transparency 20, or a portion thereof, is illuminated by backlighting as in the previous embodiments. the illumination intensity on the remaining display area is substantially reduced by curtain 110 or by selective deactivation of some of sources 302 which are preferably controlled by control system 126. It should be appreciated that sources 302 can be horizontal or vertical as long as motion of curtain 110 is substantially perpendicular to sources 302.

Fig. 4 schematic illustrates a further preferred embodiment of the present invention in which the at least one moving opaque curtain, 108 or 110, is placed between illumination sources 104 and a front panel 924 which may be transparent, translucent, fluorescent, phosphorescent, diffusing or any combination of the above. Reflector 102 is preferably used in order to re-utilize some of the rear and side illumination from sources 104 as described above. Additionally, in a preferred embodiment, curtains 108 and/or 110 are backpainted, i.e. painted on the surface facing backlight sources 104, with reflective paint.

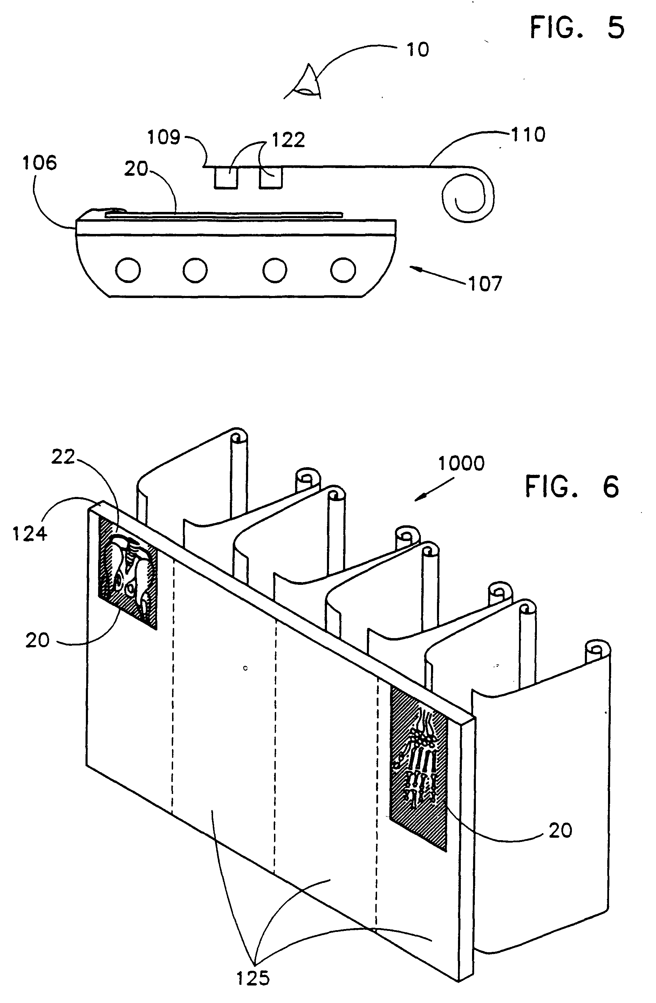

Fig. 5 schematically illustrates a yet further preferred embodiment of the present invention in which the at least one moving curtain, 108 or 110, having photosensors 122 mounted near the edge 109 thereof, is placed between transparency 20 and an observer 10. According to this arrangement, transparency 20 is placed directly on the face plate of backlight arrangement 107, which may include diffuser 106, thereby obviating the need for a separate faceplate such as faceplate 124 (Fig. 1A). In the arrangement of Fig. 5, at least one photosensor 122 is located at near the edge 109 of movable curtain 110 and is oriented to receive light from the direction of backlighting arrangement 107, either directly or through transparency 20 or image-carrying portion 22 thereof.

Photosensors 122 respond to changes in light intensity, particularly changes caused when curtain 110 reaches an edge of transparency 20 or an edge of image-carrying portion 22. In response to such intensity changes, sensors 122 produce signals T_{X}(Y), T_{Y}(X) or T(X,Y) which correspond to the attenuation of light at different locations (X,Y) on the face of backlighting arrangement 107. Subsequently, the above signals are used by system controller 126, as described above, to determine and control the positioning of curtains 110 or 108 as described above.

Fig. 6 is a schematic, perspective, illustration of a further preferred embodiment of the present invention in which a plurality of self-maskable backlighting units 125 are joined behind a common faceplate 124 to form a self-masking multitransparency display 1000. According to this arrangement, at least two transparencies 20 can be presented simultaneously on self-masking display device 1000. Since this aspect of the present invention is particularly suitable for radiology film viewing, units 125 are preferably designed to accommodate standard size radiology films which are normally integer multiples of 35.56 cm x 43.18 cm (14"x17"), e.g. 35.56 cm x 43.18 cm (14"x17"), 71.12 cm x 43.18 cm (28"x17"), 142.24 cm x 43.18 cm (56"x17") or 142.24 cm x 86.36 cm (56"x24"). Self-masking in each of units 125 may be in accordance with any of the embodiments described above.

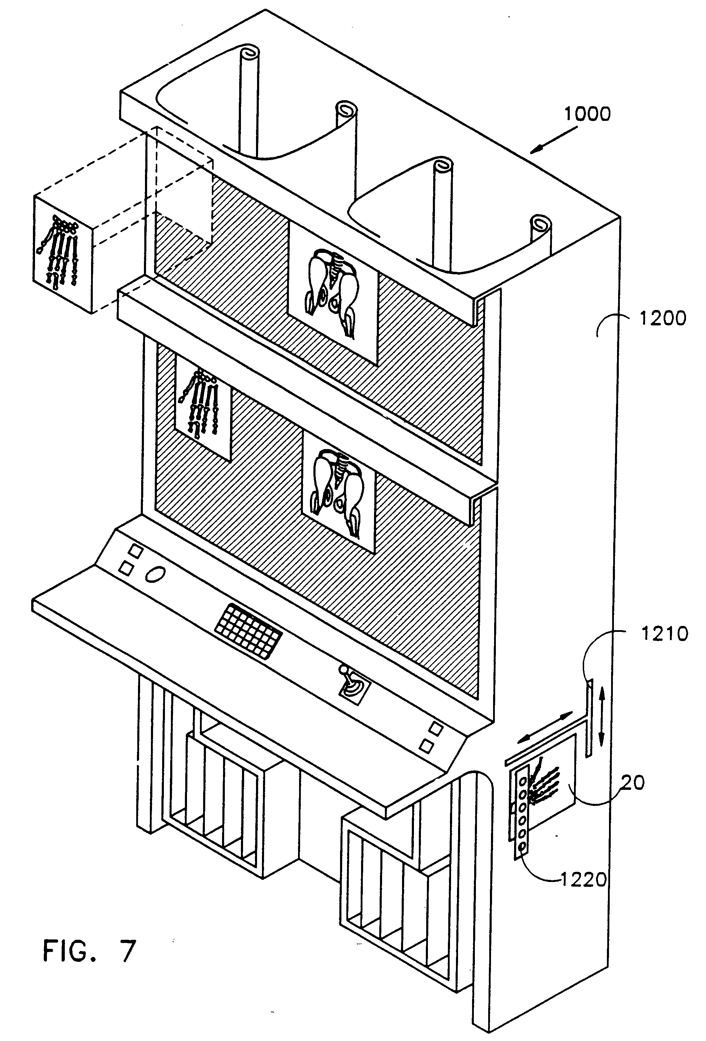

Fig. 7 schematically illustrates a further preferred embodiment of the present invention in which self-masking display device 1000 is incorporation in a magazine fed automatic film exchanger, hereinafter referred to as alternator 1200. Operation of the self-masking display device 1000 within alternator 1200 can be substantially as described above with reference to Fig. 6 and alternator 1200 can be operated as described in U.S. patent applications S.N. 07/861,982, S.N. 07/862,982, in PCT application PCT/EP91/01310 or in new U.S. patent application and new PCT patent application to Inbar et al., both of which are titled "Improved Display Device" and both filed on November 28, 1994. However, in a preferred embodiment of the invention, additional pick & place feeder mechanism 1210 of alternator 1200 is utilized to perform some of the identification tasks required for correctly masking units 125 (Fig. 6) of display device 1000. For example, if a horizontal moving linear feeder 1210 is used, a vertical line of photosensors 1220 can be placed juxtaposed with the moving film 20 and can be, thus, utilized for mapping film boundaries, image densities and the like.

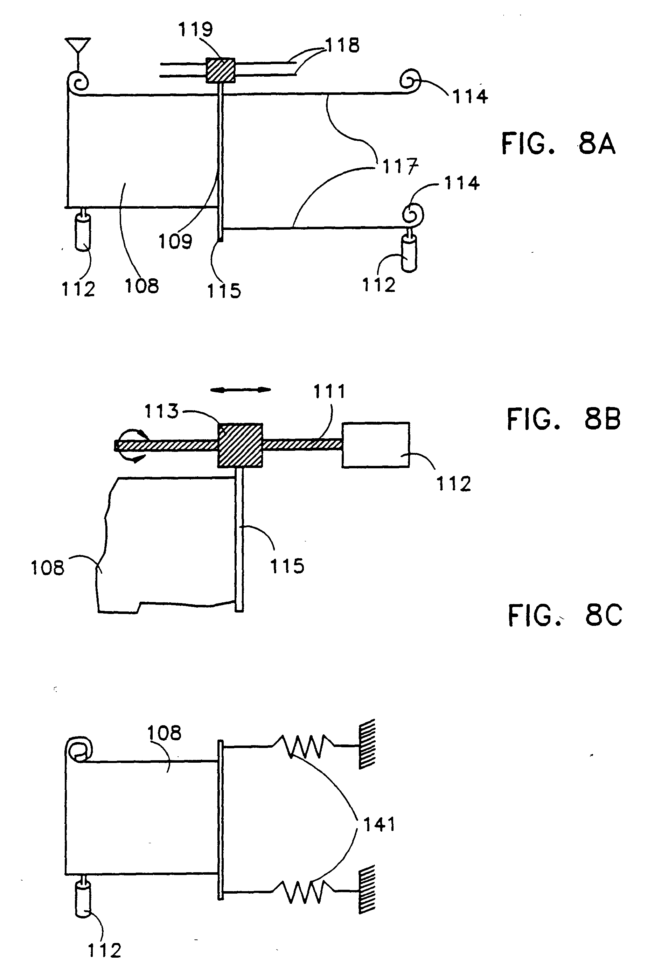

Figs. 8A, 8B and 8C show schematically three examples of motorized masking-element arrangements, such as movable opaque curtain arrangements, which can be alternatively used in any of the embodiments of the present invention described above.

Fig. 8A describes one preferred arrangement in which a flexible curtain, 110 or 108, is rolled around the axis of a motor 112 and is pulled by wires 117. The wires are wrapped around pulleys 114 connected to an additional motor 112. The opaque curtains are pulled along retracted linear tracks 118 with optional friction reducing bearings 119 in response to synchronized clockwise or anti-clockwise revolutions of the motors 112. A rigid rod 115 is preferably attached to edge 109 of opaque curtain 108 or 110.

Fig. 8B describes an alternative linear motion mechanism comprising a motor 112, a leading screw 111, preferably a rolled ball screw, and a flanged-nut 113 which is connected to the rigid member 115 as in the embodiment of Fig. 8A. The revolutions of motor 112 are translated to linear motion of the flanged-nut 113 forwards or backwards, depending on the direction of motor revolutions, whereby edge 109 of opaque curtain 108 or 110 moves together with rigid rod 115.

Fig. 8C describes a mechanism similar to that of Fig. 8A but also including springs 141 which support curtain 108 or 110 in a stretched-out position while it is being moved back and forth by virtue of motor 112.

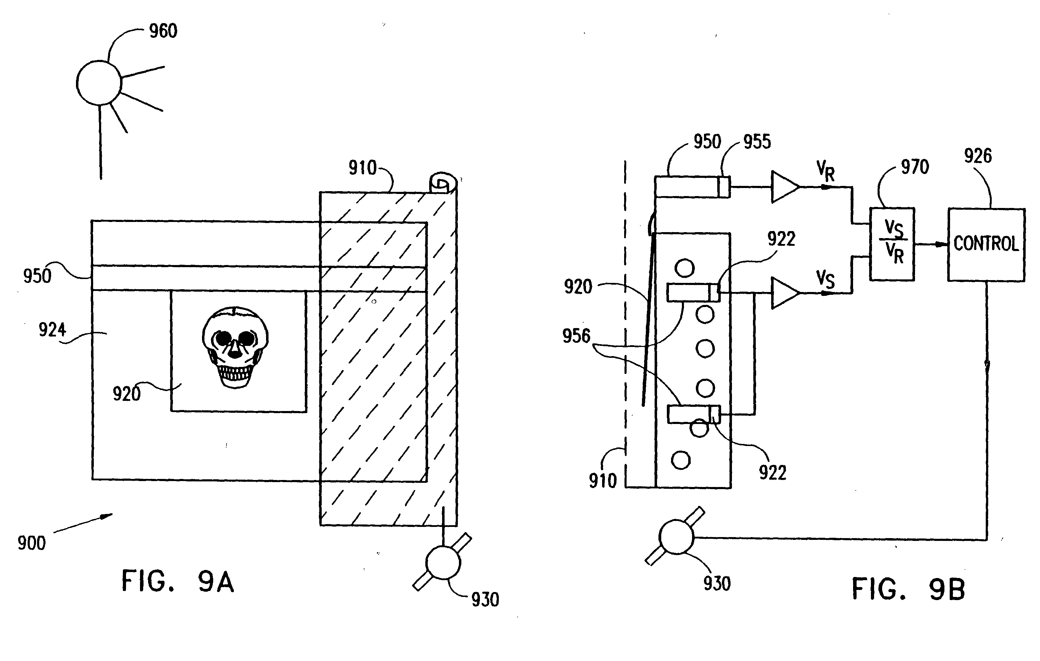

Reference is now made to Figs. 9A and 9B which schematically illustrate a self-masking display device 900 constructed and operative in accordance with a further, preferred, embodiment of the present invention, in which an ambient light reference is employed by a controller 926 in determining the correct positioning of a movable opaque curtain 910, such as curtain 108 or 110 (Figs. 1 - 8), by a motorized mechanism including a motor 930 similar to motor 112 (Fig. 1G). As seen particularly in Fig. 9A, display device 900 preferably includes an ambient light collector 950, which preferably comprises an elongated lightguide, located adjacent to and on the same plane with a faceplate 924 of device 900 and having a long dimension substantially parallel to the line of motion of curtain 910.

The long dimension of collector 950 is preferably aligned with faceplate 924, such that the percentage of the area covered by curtain 910 is substantially the same for collector 950 as for faceplate 924. Thus, when faceplate 924 is clear, i.e. no transparency is placed thereon, there is a predetermined, constant, ratio between the total amount of light received through collector 950 and that received through faceplate 924, for any positioning of curtain 910 and for any level of ambient light.

As seen in Fig. 9B, display device 900 preferably further includes viewing sensors 922, which sense a predetermined portion of the ambient light received through faceplate 924 and generate a corresponding voltage, Vₛ, and a reference sensor 955 which senses the amount of ambient light collected through collector 950 and generates a corresponding reference voltage, Vᵣ. Sensors 922 are preferably associated with elongated lightguides 956, which are preferably substantially parallel to collector 950 and have substantially the same length as collector 950. Lightguides 956 may extend in front of the light sources as shown in the figure, or if modulation coding or a specific spectrum is used for light source 960, the lightguides may be behind the line of light sources.

The ratio between voltages Vₛ and Vᵣ, i.e. Vₛ/Vᵣ, is preferably determined by a ratio-circuit 970 which generates a corresponding electric signal to controller 926. When faceplate is clear, i.e., when no transparency is present on the faceplate, the ratio Vₛ/Vᵣ is a constant. When a transparency is present on the viewing surface, as curtain 910 moves along the faceplate, the amount of light collected by sensors 922 varies differently from that of sensor 955 and the ratio is no longer constant. Simple analysis of the ratio (and its derivative) as a function of distance or time allows controller 926 to detect the edges of the image portion of the transparency or of the transparency itself and position the curtain accordingly.

It should be appreciated that the use of lightguides such as lightguides 956 is not limited to the embodiment of Figs. 9A and 9B and may be applied to any of the preferred embodiments described above. In the preferred embodiments in which the sensors are described as being mounted on moving curtains, lightguides may be mounted on the curtains and stationary sensors may be used for sensing the intensity of light collected by the lightguides.

In this instance the lightguide can be a specular and or partially diffusing reflector used to redirect the backlighting from the moving curtain, preferably from the moving edge thereof, to stationary sensors.

It will be appreciated by persons skilled in the art that the present invention is not limited to what has been thus far described. Rather, the scope of the present invention is limited only by the following claims:

## Claims

1. A self-masking transparency viewing device comprising:
a light transmitting viewing surface (124) for accommodating a transparency (22) to be viewed;
a light source (102, 104) which provides backlight illumination to the viewing surface, thereby creating a viewing field having a transparency-bearing region; and
an automatic masking system including:
at least one sensor (122) which senses the boundaries of an image-carrying portion of the transparency-bearing region of the viewing field and provides an output corresponding to the location of said boundaries;
at least one movable masking element (108, 110) for masking a rectangular area within said viewing field outside the image carrying portion of the transparency-bearing region; and
a controller (126) which controls the position of the at least one masking element, based on the output of the at least one sensor, so as to mask at least a portion of the area of the viewing field outside the image-carrying portion of the transparency-bearing region, characterized in that said movable masking element is arranged to mask a rectangular area of substantially any desired dimensions.

2. A self-masking transparency viewing device according to claim 1 wherein the area of the viewing field masked by the masking element is substantially the entire area of the viewing field outside the transparency-bearing region.

3. A self-masking transparency viewing device according to claim 1 wherein the area of the viewing field masked by the masking element is substantially the entire area of the viewing field outside the image-carrying portion of the transparency-bearing region.

4. A device according to any of claims 1 - 3 wherein at least one of said at least one sensor (122) is mounted on at least one of said at least one movable masking element (108, 110).

5. A device according to any of claims 1 - 4 wherein the at least one movable masking element comprises at least one movable curtain.

6. A device according to any of claims 1 - 5 wherein the at least one sensor senses said boundaries by sensing a predetermined change in the intensity of light emanating from the viewing field.

7. A device according to any of the preceding claims and further comprising a diffuser, between the light source and the viewing surface, which diffuses the light from the light source to provide more homogeneous backlight illumination.

8. A device according to any of the preceding claims wherein the movable masking element is between the light source and the viewing surface.

9. A device according to claim 8 wherein the at least one sensor is oriented to receive external light transmitted through the viewing surface and wherein the sensor senses said boundaries by sensing a predetermined change in the intensity of light transmitted through the viewing surface.

10. A device according to claim 9 wherein the external light is coded modulated light.

11. A device according to claim 8 or claim 9 wherein the external light has a spectrum substantially different from that of the backlight source.

12. A device according to any of claims 1 - 7 wherein the movable masking element is between the viewing surface and an observer of the transparency.

13. A device according to claim 12 wherein the at least one sensor is oriented to receive backlight illumination transmitted through the viewing field and wherein the sensor senses said boundaries by sensing a predetermined change in the intensity of light transmitted through the viewing field.

14. A device according to any of the preceding claims wherein the viewing field is "normally masked".

15. A device according to any of the preceding claims wherein the at least one sensor comprises at least one differential sensor having two sensor elements (109, 122) which are spaced apart along the direction of motion of the masking element.

16. A device according to any of the preceding claims and further comprising a transparency holder which supports the transparency on the viewing surface.

17. A device according to any of the preceding claims wherein the boundaries sensed by the at least one sensor comprise an edge of the transparency.

18. A device according to any of claims 1 - 16 wherein the boundaries sensed by the at least one sensor comprise an edge of the image-carrying portion of the transparency.

19. A device according to any of the preceding claims wherein the movable masking element comprises a movable curtain (110) which moves in a given direction to provide masking therealong, and wherein the device further comprises a liquid crystal array (LCA) including a plurality of separately addressable, elongated, liquid crystal (LC) elements (200), having a longer dimension substantially perpendicular to the given direction, for masking perpendicular to the given direction.

20. A device according to any of claims 1-18 wherein the movable masking element comprises a movable curtain which moves in a given direction to provide masking therealong, and wherein the device further comprises means for reducing the output of said backlighting along a dimension substantially perpendicular to the given direction, for masking perpendicular to the given direction.

21. A device according to any of the preceding claims and further comprising a manual control unit (127, 126, 112) associated with the controller of the automatic masking system which directs the at least one masking element to a user-selected masking position.

22. A device according to claim 21 wherein the manual control unit comprises a detector (127) which detects the position of a hand of the user on the viewing field and generates a corresponding signal to the controller of the automatic masking system.

23. A device according to claim 22 wherein the detector comprises a differential signal detector (127).

24. A device according to any the preceding claims wherein the at least one sensor comprises a plurality of sensors (122), each sensor providing an output responsive to the light intensity sensed thereby at any given time, and wherein the controller maps the illumination intensity of the viewing field based on the sensor outputs.

25. A device according to any the preceding claims and further comprising a charged couple device, CCD, camera which maps the viewing field by generating an electronic image corresponding to the viewing field and wherein the controller controls the position of the at least one masking element based on the electronic image.

26. A device according to any of the preceding claims comprising a plurality of movable masking elements and a plurality of respective sensors, each masking element and its respective sensor being associated with a predefined region of the viewing field, wherein the controller controls the position of each masking element separately in accordance with the output provided by the respective sensor.

27. A device according to any of the preceding claims wherein no portion of the masking device is interposed between the backlight illumination and any illuminated portion of the transparency.

28. A device according to any of the preceding claims wherein the automatic masking system comprises a sensor which senses the placement of transparency on the viewing surface and wherein the automatic masking system is activated to mask the transparency in response to said sensing of the placement.

29. A device according to claim 28 wherein the automatic masking system masks the entire viewing area in response to the removal of the transparency.

30. A device according to any of the preceding claims wherein the sensors detect spatial variations of the intensity of the backlighting source and includes means for controlling the intensity of the light sources responsive to said detected spatial variations.

## Patentansprüche

1. Selbstmaskierende Transparent-Betrachtungs-vorrichtung mit:
einer lichtdurchlässigen Betrachtungsfläche (124) zur Aufnahme eines zu betrachtenden Transparents (22),
einer Lichtquelle (102, 104), die eine Hinterleuchtung für die Betrachtungsfläche bereitstellt, wodurch ein Betrachtungsfeld mit einem Transparent-tragenden Bereich geschaffen wird, und
einem automatischen Maskierungssystem mit:
zumindest einem Sensor (122), der die Grenzen eines Bild-tragenden Teils des Transparent-tragenden Bereichs des Betrachtungsfeldes erfaßt und ein dem Ort der Grenzen entsprechendes Ausgangssignal bereitstellt,
zumindest einem beweglichen Maskierungselement (108, 110) zum Maskieren eines rechtwinkligen Bereichs innerhalb des Betrachtungsfelds außerhalb des Bild-tragenden Teils des Transparent-tragenden Bereichs, und
einem Steuergerät (126), das die Position des zumindest einen Maskierungselements auf der Basis des Ausgangssignals des zumindest einen Sensors steuert, so daß zumindest ein Teil der Fläche des Betrachtungsfeldes außerhalb des Bild-tragenden Teils des Transparent-tragenden Bereichs maskiert wird, dadurch gekennzeichnet, daß
das bewegliche Maskierungselement dafür eingerichtet ist, einen rechtwinkligen Bereich mit im wesentlichen beliebigen gewünschten Abmessungen zu maskieren.

2. Selbstmaskierende Transparent-Betrachtungs-vorrichtung gemäß Anspruch 1, wobei die von dem Maskierungselement maskierte Fläche des Betrachtungsfeldes im wesentlichen die gesamte Fläche des Betrachtungsfeldes außerhalb des Transparent-tragenden Bereichs ist.

3. Selbstmaskierende Transparent-Betrachtungs-vorrichtung gemäß Anspruch 1, wobei die von dem Maskierungselement maskierte Fläche des Betrachtungsfeldes im wesentlichen die gesamte Fläche des Betrachtungsfeldes außerhalb des Bild-tragenden Teils des Transparent -tragenden Bereichs ist.

4. Vorrichtung gemäß einem der Ansprüche 1-3, wobei zumindest einer der Sensoren (122), von denen zumindest einer vorhanden ist, auf zumindest einem der beweglichen Maskierungselemente (108, 110) angebracht ist, von denen zumindest eines vorhanden ist.

5. Vorrichtung gemäß einem der Ansprüche 1-4, wobei das zumindest eine bewegliche Maskierungselement zumindest einen beweglichen Vorhang umfaßt.

6. Vorrichtung gemäß einem der Ansprüche 1-5, wobei der zumindest eine Sensor die Grenzen erfaßt, indem er eine vorbestimmte Änderung der Intensität des aus dam Betrachtungsfeld austretenden Lichts erfaßt.

7. Vorrichtung gemäß einem der vorhergehenden Ansprüche und außerdem mit einem Diffusor zwischen der Lichtquelle und der Betrachtungsfläche, der das Licht aus der Lichtquelle diffus zerstreut, um eine homogenere Hinterleuchtung bereitzustellen.

8. Vorrichtung gemäß einem der vorhergehenden Ansprüche, wobei das bewegliche Maskierungselement zwischen der Lichtquelle und der Betrachtungsfläche liegt.

9. Vorricheung gemäß Anspruch 8, wobei der zumindest eine Sensor so ausgerichtet ist, daß er externes, durch die Betrachtungsfläche durchgetretenes Licht erfaßt und wobei der Sensor die Grenzen erfaßt, indem er eine vorbestimmte Änderung der Intensität des durch die Betrachtungsfläche durchgetretenen Lichts erfaßt.

10. Vorrichtung gemäß Anspruch 9, wobei das externe Licht kodiertes moduliertes Licht ist.

11. Vorrichtung gemäß Anspruch 8 oder 9, wobei das externe Licht ein Spektrum aufweist, daß von demjenigen der Hinterleuchtungsquelle im wesentlichen verschieden ist.

12. Vorrichtung gemäß einem der Ansprüche 1-7, wobei das bewegliche Maskierungselement zwischen der Betrachtungsfläche und dem Betrachter des Transparents liegt.

13. Vorrichtung gemäß Anspruch 12, wobei der zumindest eine Sensor so ausgerichtet ist, daß er die durch das Betrachtungsfeld durchgetretene Hinterleuchtung empfängt und wobei der Sensor die Grenzen erfaßt, indem er eine vorbestimmte Änderung der Intensität des durch das Betrachtungsfeld durchgetretenen Lichts erfaßt.

14. Vorrichtung gemäß einem der vorhergehenden Ansprüche, wobei das Betrachtungsfeld "normal maskiert" ist.

15. Vorrichtung gemäß einem der vorhergehenden Ansprüche, wobei der zumindest eine Sensor zumindest einen Differentialsensor mit zwei Sensorelementen (109, 122) umfaßt, die längs der Bewegungsrichtung des Maskierungselements beabstandet sind.

16. Vorrichtung gemäß einem der vorhergehenden Ansprüche und außerdem mit einem Transparent-Halter, der das Transparent auf der Betrachtungsfläche hält.

17. Vorrichtung gemäß einem der vorhergehenden Ansprüche, wobei die von dem zumindest einen Sensor erfaßten Grenzen zumindest einen Rand des Transparents umfassen.

18. Vorrichtung gemäß einem der Ansprüche 1-16, wobei die von dem zumindest einen Sensor erfaßten Grenzen, zumindest einen Rand oder den Bild-tragenden Teil des Transparents umfassen.

19. Vorrichtung gemäß einem der vorhergehenden Ansprüche, wobei das bewegliche Maskierungselement einen beweglichen Vorhang (110) umfaßt, der sich in eine gegebene Richtung bewegt, um entlang dieser eine Maskierung vorzusehen, und wobei die Vorrichtung außerdem zum Maskieren senkrecht zu der gegebenen Richtung ein Flüssigkristallarray (LCA) umfaßt, das eine Mehrzahl separat adressierbarer, länglicher Flüssigkristallelemente (LC) (200) beinhaltet, die im wesentlichen senkrecht zu der gegebenen Richtung eine längere Abmessung aufweisen.

20. Vorrichtung gemäß einem der Ansprüche 1-18, wobei das bewegliche Maskierungselement einen beweglichen Vorhang umfaßt, der sich in eine gegebene Richtung bewegt, um entlang dieser eine Maskierung vorzusehen, und wobei die Vorrichtung außerdem zum Maskieren senkrecht zu der gegebenen Richtung Mittel zum Vermindern der Ausgangsleistung der Hinterleuchtung längs einer im wesentlichen zu der gegebenen Richtung senkrechten Abmessung umfaßt.

21. Vorrichtung gemäß einem der vorhergehenden Ansprüche und außerdem mit einer manuellen Steuerungseinheit (127, 126, 112), die mit dem Steuergerät des automatischen Maskierungssystems verbunden ist, die das zumindest eine Maskierungselement zu einer benutzergewählten Maskierungsposition lenkt.

22. Vorrichtung gemäß Anspruch 21, wobei die manuelle Steuerungseinheit einen Sensor (127) umfaßt, der die Position einer Hand des Benutzers auf dem Betrachtungsfeld erfaßt und ein entsprechendes Signal für das Steuerungsgerät des automatischen Maskierungsgeräts erzeugt.

23. Vorrichtung gemäß Anspruch 22, wobei der Detektor einen Differentialsignaldetektor (127) umfaßt.

24. Vorrichtung gemäß einem der vorhergehenden Ansprüche, wobei der zumindest eine Sensor eine Mehrzahl von Sensoren umfaßt (122), wobei jeder Sensor ein auf die von ihm zu einem beliebigen Zeitpunkt gemessene Lichtintensität reagierendes Ausgangssignal bereitstellt, und wobei das Steuergerät die Beleuchtungsintensität des Betrachtungsfeldes auf der Basis des Sensorausgangssignals abbildet.

25. Vorrichtung gemäß einem der vorhergehenden Ansprüche außerdem mit einer Kamera mit einer ladungsgekoppelten Vorrichtung, CCD, die das Betrachtungsfeld durch Erzeugen eines elektronischen Bildes abbildet, das dem Betrachtungsfeld entspricht, und wobei das Steuergerät die Position des zumindest einen Maskierungselements auf der Basis des elektronischen Bildes steuert.

26. Vorrichtung gemäß einem der vorhergehenden Ansprüche mit einer Mehrzahl beweglicher Maskierungselemente und einer Mehrzahl zugehöriger Sensoren, wobei jedes Maskierungselement und sein zugehöriger Sensor mit einem vorbestimmten Bereich des Betrachtungsfeldes verknüpft sind, wobei das Steuergerät die Position jedes Maskierungselements separat gemäß des von dem zugehörigen Sensor gelieferten Ausgangssignals steuert.

27. Vorrichtung gemäß einem der vorhergehenden Ansprüche, wobei zwischen der Hinterleuchtung und jeglichem beleuchteten Teil des Transparents kein Teil der Maskierungsvorrichtung angeordnet ist.

28. Vorrichtung gemäß einem der vorhergehenden Ansprüche, wobei das automatische Maskierungssystem einen Sensor umfaßt, der die Plazierung des Transparents auf der Betrachtungsfläche erfaßt und wobei das automatische Maskierungssystem als Reaktion auf das Erfassen der Plazierung aktiviert wird, um das Transparent zu maskieren.

29. Vorrichtung gemäß Anspruch 28, wobei das automatische Maskierungssystem als Reaktion auf die Entfernung des Transparents den gesamten Betrachtungsbereich maskiert.

30. Vorrichtung gemäß einem der vorhergehenden Ansprüche, wobei die Sensoren räumliche Veränderungen der Intensität der Hinterleuchtungsquelle erfassen und Mittel zum Steuern der Intensität der Lichtquellen als Reaktion auf die erfaßten räumlichen Veränderungen umfassen.

## Revendications

1. Dispositif d'observation par transparence du type à masquage automatique comprenant :
une surface d'observation (124) transmettant de la lumière pour le placement d'un transparent (21) à observer;
une source de lumière (102, 104) qui confère à la surface d'observation un éclairage par transmission en créant ainsi un champ d'observation possédant une région supportant un transparent; et
un système de masquage automatique englobant :
au moins un détecteur (122) qui détecte les limites d'une portion portant une image de la région supportant un transparent du champ d'observation et qui procure une sortie correspondant à la localisation desdites limites;
au moins un élément de masquage mobile (108, 110) pour masquer une zone rectangulaire à l'intérieur dudit champ d'observation à l'extérieur de la portion portant une image de la région supportant un transparent; et
un dispositif de commande (126) qui règle la position dudit ou desdits éléments de masquage en se basant sur la sortie dudit ou desdits détecteurs de façon à masquer au moins une portion de la zone du champ d'observation à l'extérieur de la portion portant une image de la région supportant un transparent, caractérisé en ce que ledit élément de masguage mobile est arrangé pour masquer une zone rectangulaire essentiellement de n'importe quelles dimensions désirées.

2. Dispositif d'observation par transparence du type à masquage automatique selon la revendication 1, dans lequel la zone du champ de vision masquée par l'élément de masquage représente essentiellement la totalité de la zone du champ d'observation à l'extérieur de la région supportant un transparent.

3. Dispositif d'observation par transparence du type à masquage automatique selon la revendication 1, dans lequel la zone du champ de vision masquée par l'élément de masquage représente essentiellement la totalité de la zone du champ d'observation à l'extérieur de la portion portant une image de la région supportant un transparent.

4. Dispositif selon l'une quelconque des revendications 1 à 3, dans lequel au moins un desdits détecteurs (122) est monté sur au moins un desdits éléments de masquage mobile (108, 110).

5. Dispositif selon l'une quelconque des revendications 1 à 4, dans lequel ledit ou lesdits éléments de masquage comprennent au moins un rideau mobile.

6. Dispositif selon l'une quelconque des revendications 1 à 5, dans lequel ledit ou lesdits détecteurs détectent lesdites limites en détectant un changement prédéterminé de l'intensité de la lumière émanant du champ d'observation.

7. Dispositif selon l'une quelconque des revendications précédentes et comprenant en outre un diffuseur, entre la source de lumière et la surface d'observation, qui diffuse la lumière depuis la source de lumière pour procurer un éclairage par transmission plus homogène.

8. Dispositif selon l'une quelconque des revendications précédentes, dans lequel l'élément de masquage mobile est disposé entre la source de lumière et la surface d'observation.

9. Dispositif selon la revendication 8, dans lequel ledit ou lesdits détecteurs sont orientés pour recevoir une lumière externe transmise à travers la surface d'observation et dans lequel le détecteur détecte lesdites limites en détectant un changement prédéterminé de l'intensité de la lumière transmise à travers la surface d'observation.

10. Dispositif selon la revendication 9, dans lequel la lumière externe est de la lumière modulée codée.

11. Dispositif selon la revendication 8 ou 9, dans lequel la lumière externe possède un spectre essentiellement différent de celui de la source d'éclairage par transmission.

12. Dispositif selon l'une quelconque des revendications 1 à 7, dans lequel l'élément de masquage mobile est disposé entre la surface d'observation et un observateur du transparent.

13. Dispositif selon la revendication 12, dans lequel ledit ou lesdits détecteurs sont orientés pour recevoir un éclairage par transmission transmis à travers le champ d'observation et dans lequel le détecteur détecte lesdites limites en détectant un changement prédéterminé de l'intensité de la lumière transmise à travers le champ d'observation.

14. Dispositif selon l'une quelconque des revendications précédentes, dans lequel le champ d'observation est "normalement masqué".

15. Dispositif selon l'une quelconque des revendications précédentes, dans lequel ledit ou lesdits détecteurs comprennent au moins un détecteur différentiel possédant deux éléments de détection (109, 122) qui sont espacés l'un de l'autre dans la direction de mouvement de l'élément de masquage.

16. Dispositif selon l'une quelconque des revendications précédentes et comprenant en outre un support de transparent qui supporte le transparent sur la surface d'observation.

17. Dispositif selon l'une quelconque des revendications précédentes, dans lesquelles les limites détectées par ledit ou par lesdits détecteurs comprennent un bord du transparent.

18. Dispositif selon l'une quelconque des revendications 1 à 16, dans lesquelles les limites détectées par ledit ou par lesdits détecteurs comprennent un bord de la portion portant une image du transparent.

19. Dispositif selon l'une quelconque des revendications précédentes, dans lequel l'élément de masquage mobile comprend un rideau mobile (110) qui se déplace dans une direction donnée pour procurer un masquage le long de cette direction, et dans lequel le dispositif comprend en outre un affichage à cristaux liquides (LCA) comprenant plusieurs élément de cristaux liquides (LC) (200) de forme allongée et qui peuvent être excités de manière séparée, dont la longueur est essentiellement perpendiculaire à la direction donnée pour procurer un masquage perpendiculaire à la direction donnée.

20. Dispositif selon l'une quelconque des revendications 1 à 18, dans lequel l'élément de masquage mobile comprend un rideau mobile qui se déplace dans une direction donnée pour procurer un masquage le long de cette direction, et dans lequel le dispositif comprend en outre un moyen pour réduire la sortie dudit éclairage par transmission le long d'une direction essentiellement perpendiculaire à la direction donnée pour procurer un masquage perpendiculaire à la direction donnée.

21. Dispositif selon l'une quelconque des revendications précédentes et comprenant en outre une unité de commande manuelle (127, 126, 112) associée au dispositif de commande du système de masquage automatique, qui oriente ledit ou lesdits éléments de masquage par rapport à une position de masquage sélectionnée par l'utilisateur.

22. Dispositif selon la revendication 21, dans lequel l'unité de commande manuelle comprend un détecteur (127) qui détecte la position d'une main de l'utilisateur sur le champ d'observation et génère un signal correspondant en direction du dispositif de commande du système de masquage automatique.

23. Dispositif selon la revendication 22, dans lequel le détecteur comprend un détecteur de signaux de type différentiel (127).

24. Dispositif selon l'une quelconque des revendications précédentes, dans lequel ledit ou lesdits détecteurs comprennent plusieurs détecteurs (122), chaque détecteur procurant une réponse sensible à l'intensité de la lumière détectée à n'importe quel moment donné, et dans lequel le dispositif de commande représente l'intensité d'éclairage du champ d'observation en se basant sur les sorties des détecteurs.

25. Dispositif selon l'une quelconque des revendications précédentes et comprenant en outre une caméra sous la forme d'un dispositif à charge couplée, CCD, qui représente le champ d'observation en générant une image électronique correspondant au champ d'observation et dans lequel le dispositif de commande règle la position dudit ou desdits éléments de masquage en se basant sur l'image électronique.

26. Dispositif selon l'une quelconque des revendications précédentes comprenant plusieurs éléments de masquage mobiles et plusieurs détecteurs respectifs, chaque élément de masquage et son détecteur respectif étant associés à une région prédéfinie du champ d'observation, dans lequel le dispositif de commande règle la position de chaque élément de masquage de manière séparée en fonction de la sortie fournie par le détecteur respectif.

27. Dispositif selon l'une quelconque des revendications précédentes, dans lequel aucune portion du dispositif de masquage n'est intercalée entre l'éclairage par transmission et une quelconque portion éclairée du transparent.

28. Dispositif selon l'une quelconque des revendications précédentes, dans lequel le système de masquage automatique comprend un détecteur qui détecte le placement d'un transparent sur la surface d'observation et dans lequel le système de masquage automatique est activé pour masquer le transparent en réponse à ladite détection dudit placement.

29. Dispositif selon la revendication 28, dans lequel le système de masquage automatique masque la zone d'observation dans sa totalité en réponse au retrait du transparent.

30. Dispositif selon l'une quelconque des revendications précédentes, dans lequel les détecteurs détectent des variations spatiales de l'intensité de la source d'éclairage par transmission et comprenant des moyens pour régler l'intensité des sources de lumière en réponse auxdites variations spatiales détectées.
